# EUROPEAN PATENT SPECIFICATION

(11) **EP 3 421 203 B1**
(45) Date of publication and mention of the grant of the patent: **12.08.2020**
(21) Application number: 18180198.6
(22) Date of filing: 27.06.2018
(51) Int. Cl.: B28B 11/00, B28B 11/04

(54) **METHOD AND DEVICE FOR THE PREPARATION OF A GLAZE**
VERFAHREN UND VORRICHTUNG ZUR ZUBEREITUNG EINER GLASUR
PROCÉDÉ ET DISPOSITIF DE PREPARATION D`UNE GLACURE

(43) Date of publication of application: 02.01.2019
(73) Proprietor: Air Power Group S.p.A., 42013 Casalgrande (Reggio Emilia) (IT)
(72) Inventor: Malavasi, Paolo, 41019 Soliera (Modena) (IT)
(74) Representative: Ruzzu, Giammario

(56) References cited:
- EP-A1- 1 281 495
- EP-A1- 2 703 930
- US-A- 5 505 539

## Description

### DESCRIPTION OF THE INVENTION

The present invention relates to the technical field concerning glazing plants, in particular those present in factories for the production of floor and wall ceramics.

### PRIOR ART CORRELATED TO THE INVENTION

During the glazing process, very important in the production of ceramic tiles, the colour and/or decoration are applied to give the tile a selected aesthetic aspect. See for example EP2703930.

In order to assure a perfect glazing, it is necessary to prepare accurately the glaze to be applied, which is composed of high density virgin glaze, additives (known to those skilled in the art) and dilution liquid consisting of water.

Percentages of the mixture components must be accurate so as to obtain the selected final density, suitable for feeding correctly the working means such as, inter alia, pumps and spraying nozzles.

The characteristics of the glaze mixture should remain as constant as possible during the whole production.

In the plants currently in production, glaze, additives and water are mixed together manually as required, simply introducing weighed quantities of virgin glaze, additives and water into a dosing tank.

The glaze mixture is fed, in known way, from the dosing vessel to the applicators, which distribute it onto the articles to be decorated, for example ceramic tiles.

Specially trained operators replenish manually the dosing vessel with the glaze mixture periodically on the basis of the consumption of the product.

The part of the glaze, which is ejected by the applicators but does not reach the articles to be decorated, deposits on the bottom of the glazing chamber, then it is recovered by a suitable recovery pump and re-cycled to the dosing vessel.

A first drawback that can be noticed derives from the fact that, during the delivery and subsequent recovery, a part of the water from the glaze mixture evaporates and, consequently, the density of the recovered glaze reintroduced into the dosing vessel is higher than the selected workable density. This gradually changes the density of the glaze supplied to the applicators and influences the final results on the product, modifying the colour rendering.

Another drawback derives from the inevitable loss of glaze, which periodically occurs in the glazing chambers.

Washing cycles, carried out on schedule or after colour change, are provided to wash the whole supply circuit of the applicators, as well as the glazing chamber, whose bottom is provided with a collection tank for the washing water.

Therefore, said water will contain some glaze and additives solved therein. Besides being lost, these glaze and additives must be disposed of as special wastes to avoid environmental pollution.

### OBJECTS OF THE INVENTION

The main object of the present invention is to propose a method and apparatus for the preparation of a glaze mixture for a glazing plant, which is capable of assuring the supply of the glaze applicators with a constant and homogeneous formulation, in terms of density, of the mixture composed of glaze, water and possible additives.

Another object of the invention is to propose a method and apparatus capable of overcoming the drawbacks of the corresponding prior art, in particular regarding the possibility of recovering that part of glaze which would be otherwise lost.

Another object of the invention is to propose a method and apparatus, which allow a recovery of water used to wash the plant, so as to avoid necessary decontamination before disposal and, at the same time, a reuse of both the glaze and additives in the waters solution.

A further object of the invention is to propose an apparatus for carrying out the method, which has a reasonable price and can be also applied in the already installed facilities with simple changes applied thereto.

### SUMMARY OF THE INVENTION

These and other objects are wholly obtained by a method for the preparation of a glaze mixture for a glazing plant, consisting of doses of high density virgin glaze, additives and dilution liquid. In its most complete embodiment, the method includes: selection of a predetermined formula of said glaze mixture, with the respective percentages of virgin glaze, additives and water that give said mixture a selected final workable density; setting the above formula, complete with the quantity of the glaze mixture to prepare, in a programming unit, which controls the dosing unit provided in the glazing plant; introducing predetermined quantities of virgin glaze, additives and dilution liquid into a mixing vessel.

The method further includes:
- preparing, in the mixing vessel, a glaze mixture whose density is slightly higher than the final workable density;
- transferring of the denser glaze mixture into a dosing and measuring vessel;
- checking the exact value of the density of said denser glaze mixture contained in the dosing and measuring vessel and introducing an additional calculated amount of dilution liquid into the dosing and measuring vessel to obtain said glaze mixture having the final workable density;

- transferring the glaze mixture having the final workable density into a feeding vessel, upon request of the latter, with the mixture being continuously stirred to remain homogeneous inside the tank;
- taking of the glaze mixture having the final workable density from the feeding vessel to feed a glaze applicator assembly located in at least one glazing chamber provided in said glazing plant;
- recovering the supplied but non-applied glaze mixture from bottom of the glazing chamber, and introducing the recovered mixture into a storage vessel provided in the glazing plant, and subsequent introducing the recovered mixture from the storage vessel into the aforementioned dosing and measuring vessel or to a waste product vessel.

According to the invention, an apparatus for the preparation of a glaze mixture, which carries out the above described method, in its most complete embodiment, includes:
- a mixing vessel, in which a glaze mixture having a density slightly higher than the final workable density is prepared;
- a dosing and measuring vessel, set in communication with the mixing vessel by means of a transfer pump;
- first measuring means for checking the exact value of the density of the denser glaze mixture contained in the dosing and measuring vessel;
- a transfer pump for transferring the glaze mixture having workable density in a feeding vessel;
- a feeding pump for taking the glaze mixture having final workable density from the feeding vessel and feeding a glaze applicator assembly situated in a glazing chamber provided in the glazing plant;
- diverter means, designed to receive the recovered glaze by means of a recovery pump and send the recovered glaze selectively either to the aforementioned dosing and measuring vessel or to a waste product vessel.

### BRIEF DESCRIPTION OF THE DRAWINGS

The characteristics of the invention under discussion will become evident from the following description of preferred embodiments of the method for the preparation of a glaze mixture for a glaze plant, and preferred embodiments of the apparatus that carries out this method, according to the subject matter recited in the claims and with the help of the enclosed figures, in which:
- Fig. 1 schematically illustrates an apparatus for the preparation of a glaze mixture for a glazing plant, in its most complete configuration;
- Fig. 2 illustrates, in a view similar to the view of Fig. 1, a different embodiment of the apparatus, with simpler devices for the preparation of the mixture;
- Fig. 3 illustrates, in a view similar to the view of Figs. 1 and 2, the apparatus for the preparation of the glaze mixture in its simplest configuration.

### DETAILED DESCRIPTION OF THE INVENTION

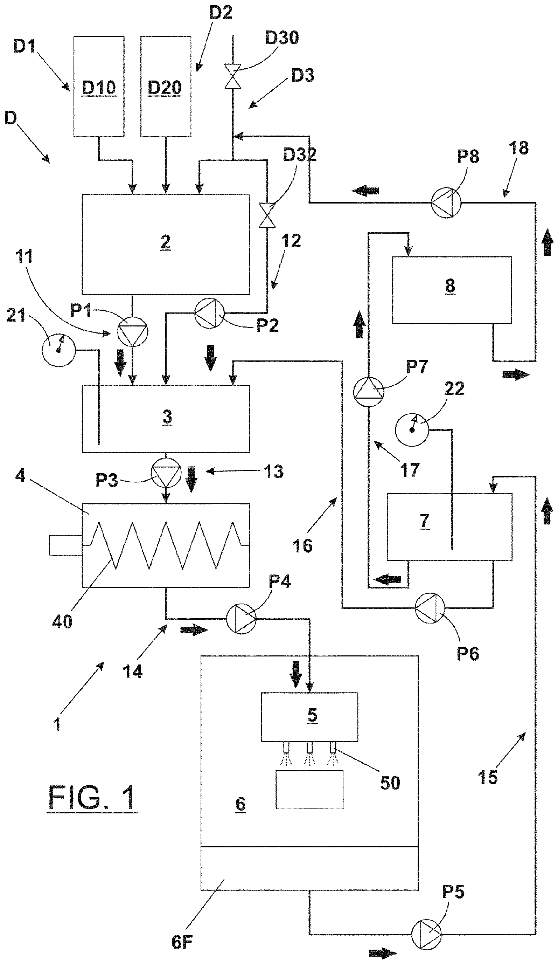

With particular reference to Fig. 1, and the most complete embodiment of the invention, reference numeral 1 indicates an apparatus for the preparation of a glaze mixture for a glazing plant (not shown), carrying out the method according to the invention.

In a manner known *per se,* the glaze mixture is composed of selected doses of high density virgin glaze, additives and dilution liquid, consisting of water, however, as it will be better detailed later on, according to an aspect of the invention, it can contain also traces of the glaze of the same type as virgin glaze. In any case, in the following, the term "dilution liquid" will be used to indicate water or water mixed with modest quantities of glaze.

The glazing plant includes one or more glaze application assemblies 5, provided with dispensing nozzles 50 and arranged inside respective glazing chambers 6, according to known techniques, not relevant to the invention.

In the apparatus 1 for the preparation of the glaze mixture, there is a dosing unit D including dosing means D1, D2, D3, controlled by a programming unit (not shown), for supplying virgin glaze, additives and dilution liquid, respectively.

The dosing means D1, D2 comprise, for example, respective tanks D10, D20 for the virgin glaze and additives, while if the dilution liquid comprises only water, the respective dosing means D3 can be connected to a water mains and include a known shut-off valve D30.

The dosing means D1, D2, D3 are intended for dispensing the respective components for the preparation of a predetermined formula of glaze mixture in a mixing vessel 2.

Besides the aforementioned dosing unit D, the apparatus 1 includes a mixing vessel 2, set in fluid communication with the aforementioned dosing means D10, D20 and D30. Such vessel 2 is particularly indicated for the preparation of big quantities of glaze mixture, also far from the glazing chamber 6 position, to be used gradually in one or more glazing chambers.

A dosing and measuring vessel 3, preferably situated near the glazing chamber 6, is connected to the mixing vessel 2 by means of a transfer pump P1, placed on a line 11 and intended for periodically transferring the denser glaze mixture into the dosing and measuring vessel 3, as necessary.

First means for measuring the density 21, provided in the vessel 3, are known and will not be described in further detail.

The dosing and measuring vessel 3 comprises also a check unit, not shown as structurally known in itself, consisting of a dedicated processor in which software procedures for data acquisition, processing and storing are set to run.

A remote connection module, provided in the check unit, can use standard communication lines and protocols, such as for example, a wired or wireless connection by a local area net and/or the Internet. These communication modes are also known and wholly standardized and will not be described in further detail.

The inlet of the dosing and measuring vessel 3 is connected to a branch 12 of the above mentioned dosing means D3, for the introduction of water based dilution liquid from the water mains into the dosing and measuring vessel.

The branch is controlled by a second shut-off valve D32 and can comprise, if necessary, an intake pump P2.

According to a characterizing aspect of the invention, the apparatus 1 further comprises a feeding vessel 4, provided with stirring means 40 to keep the glaze mixture homogeneous thereinside. The feeding vessel 4 is set in fluid communication with the dosing and measuring vessel 3 by means of a transfer pump P3, situated on a line 13, and is provided with a level checking system, likewise known, designed to command the transfer of a certain quantity of glaze mixture, when the level gets lower than a minimum.

The outlet of the feeding vessel 4 is connected with a feeding pump P4, situated on a line 14, adapted to feed the glaze applicator assembly 5 of the glazing chamber 6.

It must be said that the above described aspect of the invention advantageously allows feeding the applicator assembly 5 with a glaze mixture having always optimal density, since it has been checked and, if necessary, brought back to the workable values, in the dosing and measuring vessel 3.

The bottom 6F of the glazing chamber 6, formed by a liquid collecting vessel, is connected with the outlet to a recovery pump P5, situated on a line 15, so as to discharge and recover the collected liquids therefrom.

The recovery pump P5, in turn, is connected with a storage vessel 7, in which a known device 22 is provided for measuring the density of the glaze mixture recovered from the glazing chamber 6.

The outlet of the storage vessel 7 is connected with sorting pumps P6, P7, situated on corresponding lines 16, 17 and intended to be operated, selectively and alternatively, when a minimum level of the recovered glaze mixture in the storage vessel 7 is reached, so as to empty the storage vessel.

In particular, the sorting pump P6 sends the recovered glaze mixture into the dosing and measuring vessel, when a density equal or higher than the workable density is detected.

Alternatively, the sorting pump P7 sends the recovered glaze mixture to a waste storage vessel 8, when the detected density is lower than the workable density.

The waste storage vessel 8 is, in turn, connected with the outlet to a recycling pump P8, situated on a line P8 and, to the dosing means D3 by means of the line P8 and suitable pipes and diverting devices, and then, with the inlet, to the mixing vessel 2 and dosing and measuring vessel 3. In this way, a very diluted mixture of water and glaze, produced by the periodical washing of the glazing chamber 6, can be added as the dilution liquid instead of water.

The method proposed by the present invention, in its embodiment carried out by the above described apparatus 1, includes the following operations:
- preparing, in the mixing vessel 2, a glaze mixture, whose density is slightly higher than the final workable density; for this purpose, as already said, the method includes the introduction of a calculated quantity of dilution liquid; if a sufficient quantity is available, the dilution liquid, composed of a solution of washing water and glaze mixture, is taken from the waste storage vessel 8. In this way, the residues of glaze coming from the washing and the washing water are recycled; otherwise, fresh water is taken;
- transferring of the denser glaze mixture into the dosing and measuring vessel 3, by means of the transfer pump P1;
- checking the exact value of the density of the glaze mixture contained in the dosing and measuring vessel 3 and introducing an additional calculated amount of dilution liquid into the dosing and checking vessel to obtain said glaze mixture having workable density; in particular, a flow meter is advantageously provided in the line for adding dilution liquid, therefore the amount of liquid introduced into the vessel 3 can be defined precisely;
- transferring the glaze mixture having workable density into the feeding vessel 4, provided in the above mentioned glazing plant, on demand thereof, depending on the level of the glaze mixture in the aforementioned vessel 4;
- taking the glaze mixture having workable density from the feeding vessel 4 to feed the glaze applicator assembly 5 working in the glazing chamber 6;
- recovering the supplied and unused glaze mixture from the bottom 6F of the glazing chamber 6, and re-introducing the recovered mixture into the storage vessel 7.

When a minimum level of the recovery product is reached in the storage vessel 7, the density of the recovered glaze mixture is measured according to the method.

The method includes two options based on the measured density value:
- in the first one, corresponding to the case, in which the density of the recovered glaze mixture is equal or higher than the workable density, the recovered glaze mixture is sent directly to the dosing and measuring vessel 3;
- in the second option, corresponding to the case, in which the density of the recovered glaze mixture is lower than the workable density, due to the washing of the glazing chamber 6 with water and consequent dilution of the mixture, the latter is sent into the waste storage vessel 8.

The method further includes continuous checks of the exact value of the density of the glaze mixture contained in the dosing and measuring vessel 3, in particular after new glaze mixture has been introduced therein from the mixing vessel 2.

Upon the detection of a density higher than the workable density, the method, as already said, includes the introduction of a calculated additional amount of dilution liquid; if a sufficient quantity is available, the dilution liquid, composed of a solution of washing water and glaze mixture, is taken from the waste storage vessel 8.

When the dosing and measuring vessel 3 is filled up, another measurement of the density allows checking whether the predetermined value has been obtained.

An important characteristic of the above described method for the preparation of the glaze mixture includes the use of a suitable procedure provided in the control unit of the dosing and measuring vessel 3 to memorize in sequence and continuously the different data received by the various sensors and measuring devices, in such a way as to create a continuous "log" of the carried out operations and the situation of the glaze fed to the applicator assembly 5, or to the applicator assemblies 5, if there are more than one, and store it in one or more files in a predetermined format. Therefore, the log file can be seen directly on the control unit, or transmitted to a remote server on the communication line used by the control unit.

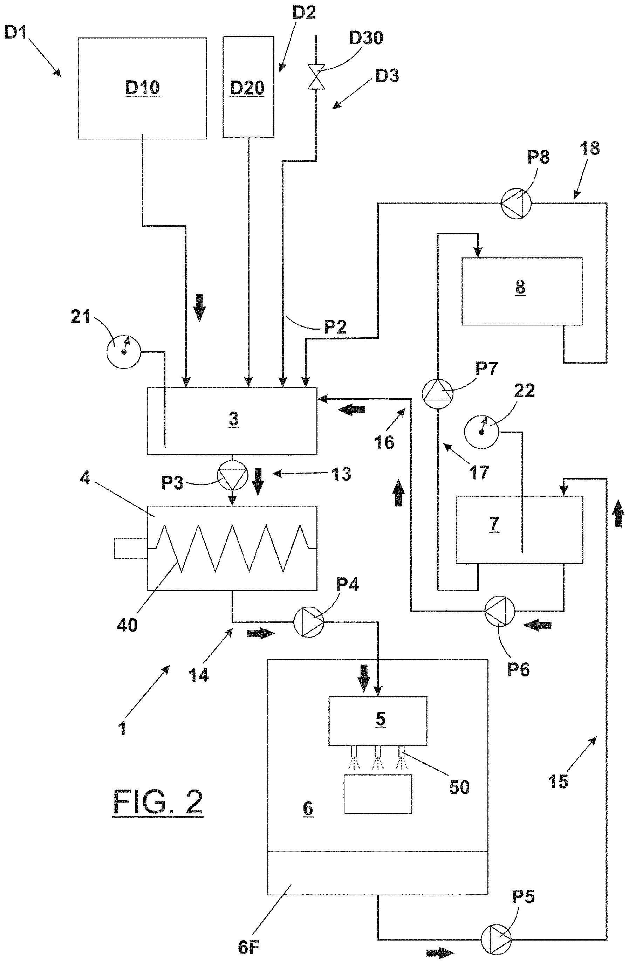

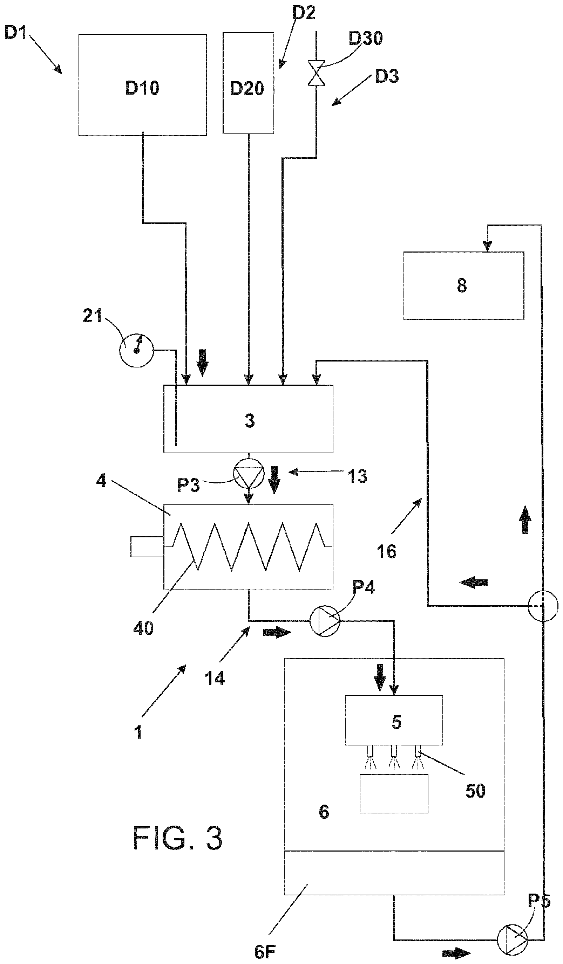

Other embodiments of the apparatus 1 are schematically illustrated in figures 2 and 3.

In particular, Figure 2 illustrates an embodiment, in which the mixing vessel 2 and the corresponding transfer pump P1 have been omitted. Such configuration obtains the objects of the invention in any case with a simplified configuration, giving up the preparation of the glaze in a decentralised way with respect to the glazing chamber 6, or anyway in a centralised way to serve more glazing chambers 6.

In this case, the glaze mixture having a right density is produced directly in the dosing and measuring vessel 3, into which the various components of the glaze mixture are poured, as already described above.

Figure 3 illustrates an embodiment of the apparatus 1 in its simplest form, which allows however to obtain the main objects of the invention.

In such embodiment, besides the mixing vessel 2, also the storage vessel 7 and sorting pumps P6, P7 have been omitted. These elements have been replaced with a hydraulic diverter 70, controlled by the check system of the dosing and measuring vessel 3, designed to set the recovery pump P5 in communication alternatively with the aforementioned dosing and measuring vessel 3 or waste product vessel 8. The switching occurs when the measured density of the recovered product is equal or higher than the workable density or lower thereof, respectively, which means that the product resulting from washing is present in the chamber 6.

In this case, the product from washing is not recycled and must be disposed of according to the conventional techniques.

The peculiar and advantageous characteristics of the method and apparatus proposed by the present invention, compared with the prior art, appear extremely clear from the above description, in particular, the possibility of recovering the exceeding part of the sprayed glaze mixture, which would otherwise be inevitably lost, with resulting economic advantages.

The possibility of recovering the plant washing water, whose solution comprises a part of recyclable glaze is equally important, but this opportunity is useful also for environmental protection, since it is possible to avoid the obligatory decontamination processes before the disposal, with all the consequent advantages, also economic.

It must be pointed out that the apparatus, although simple to obtain, allows the preparation of the glaze mixture to be applied in a flexible way, basically in real time, according to the actual conditions, that is, based on the presence and form of elements, such as glaze, additives and water, to reuse, in any way assuring a constant and homogeneous solution of the glaze mixture intended to supply the applicator members, to ensure the best possible effect.

The simple constructive solutions used for the proposed apparatus facilitates its set up, makes it reliable over time and certainly competitive in terms of costs compared to a conventional apparatus.

It is understood that what has been described above, is illustrative and not limiting, therefore, possible variants of details, which could become necessary because of technical and/or functional reasons, are considered within the same protective scope defined by the claims below.

## Claims

1. Method for the preparation of a mixture of glaze for a glazing plant, said glaze mixture comprising selected doses of high density virgin glaze, additives and dilution liquid, said virgin glaze and additives being provided on request by a dosing unit (D), said method being **characterized by** including:
- dosing components of said glaze and dilution liquid mixture in a dosing and measuring vessel (3) provided in said glazing plant, and checking the density and composition of said mixture to keep it within tolerances prescribed for its use by drawing suitable quantities of virgin glaze, additives or dilution liquid;
- periodically drawing amounts of said glaze mixture having workable density by a feeding vessel (4) provided in said glazing plant and connected to said dosing and measuring vessel (3), so as to keep a quantity of glaze mixture greater than a minimum operating value inside said feeding vessel (4);
- taking said glaze mixture having workable density from the feeding vessel (4) to feed a glaze applicator assembly (5) located in at least one glazing chamber (6) provided in said glazing plant;
- recovering supplied and non-applied glaze mixture from bottom (6F) of the glazing chamber (6), and re-introduction thereof in circulation upstream of said dosing and measuring vessel (3).

2. Method according to claim 1, **characterized in that**, alternatively, supplied and non-applied glaze mixture recovery includes directing said mixture to said dosing and measuring vessel (3), or to a waste storage container (8), the latter operation being carried out as a result of the detection of a significant drop in density of said mixture, due to a in-progress washing operation of said chamber (6).

3. Method according to claim 1, **characterized in that** the recovered non-applied glaze mixture is introduced in a storage vessel (7) provided in the same glazing plant.

4. A method according to claim 3, **characterized by** including measuring the density of recovered glaze mixture after said recovery step and when a minimum level has been reached in said storage vessel (7); sending the recovered glaze mixture to a waste storage container (8), when the measured density thereof is lower than the workable value with a selected threshold that is indicative that said glazing chamber (6) is being washed with water.

5. Method according to claim 4, **characterized by** including a new measurement of the exact value of the density of said glaze mixture contained in the dosing and measuring vessel (3) and, if this density is lower than the workable density, introduction of a calculated additional amount of dilution liquid, taking the latter from said waste storage container (8), said dilution liquid consisting of a solution of washing water and glaze mixture.

6. Method according to claim 1, **characterized in that** said glaze mixture is first prepared in a mixing vessel (2), to which said virgin glaze, additives and dilution liquid are linked, with a density slightly greater than the final workable density, this workable density being obtained subsequently inside said dosing and measuring vessel (3) by further dilution of said mixture.

7. Method according to any of claims 1 to 6, **characterized by** further including acquiring and storing, periodically or continuously, data received by a check unit of the apparatus (1) from sensors and measuring devices of the apparatus (1), creating at least one log file of the performed operations and acquired data, and making available said at least one log file for local display or remote transmission.

8. An apparatus for the preparation of a glaze mixture for a glazing plant, said glaze mixture comprising fixed doses of high density virgin glaze, additives and dilution liquid, said apparatus including a dosing unit (D), controlled by a programming unit, for the preparation of a predetermined formulation of said glaze mixture, with a selected density, said apparatus (1) being **characterized by** including:
- a dosing and measuring vessel (3), adapted to receive and contain said glaze mixture, additives and dilution liquid;
- first measuring means (21), acting in said dosing and measuring vessel (3) for checking the density value of said glaze mixture contained in the latter vessel;
- a feeding vessel (4), intended to periodically receive glaze mixture with the correct workable density from said dosing and measuring vessel (3) by means of at least one transfer pump (P3), so as to maintain a minimum operational level thereinside;
- motorized stirring means (40), provided in said feeding vessel (4) so as to keep said glaze mixture having the workable density in continuous movement;
- at least one feeding pump (P4) for periodically taking said glaze mixture having workable density from said feeding vessel (4) and feeding a glaze applicator assembly (5) situated in at least one glazing chamber (6) provided in said glazing plant;
- at least one recovery pump (P5) for recovering non-applied glaze mixture or residues of the glazing chamber (6) washing from bottom (6F) of said glazing chamber (6);
- a waste storage container (8), set in interruptible fluid communication with said bottom (6f) and adapted to receive said washing residues;
- diverting means (9), adapted to direct the material recovered from said bottom alternatively to said dosing and measuring vessel (3) or to said waste storage container (8).

9. An apparatus according to claim 8, **characterized in that** said diverting means (9) include a fluid diverter (91) designed to direct, upon command, said recovered material alternatively to said dosing and measuring vessel (3) or to said waste storage container (8).

10. An apparatus according to claim 8, **characterized in that** said diverting means (9) comprise a storage vessel (7) adapted to receive said recovered material, and by further comprising second measuring means (22) aimed at checking the density value of said recovered material, and sorting pumps (P6, P7) which can be selectively operated when a minimum level is reached in the storage vessel (7), either to send said recovered glaze mixture to said dosing and measuring vessel (3), when a density close to the workable density is detected, or to send said recovered glaze mixture to said waste storage vessel (8), when a density lower than the workable density of a predetermined threshold is detected, respectively, the latter vessel being set in fluid communication with said dosing and measuring vessel (3).

11. An apparatus according to claim 8, **characterized by** further including a mixing vessel (2), set in fluid communication with said dosing unit (D) and with said dosing and measuring vessel (3), and adapted to prepare and contain a glaze mixture having a density slightly greater than the final workable density, to be supplied subsequently to said dosing and measuring vessel (3) on request.

12. An apparatus according to any of the claims 8 to 11, **characterized by** further including software means in a computerized check unit of said apparatus (1) for data acquisition from sensors and measuring devices of the apparatus (1), and for creation of at least one log file containing said data and information relating to the situation of the glaze mixture, and for making available at least one log file for subsequent display thereof locally or remotely.

## Patentansprüche

1. Verfahren zur Herstellung einer Glasurmischung für eine Glasuranlage, wobei die Glasurmischung ausgewählte Dosen von jungfräulicher Glasur hoher Dichte, Additiven und Verdünnungsflüssigkeit umfasst, wobei die jungfräuliche Glasur und Additive auf Anfrage von einer Dosiereinheit (D) bereitgestellt werden; wobei das Verfahren **gekennzeichnet ist durch**:
- Dosieren von Komponenten der Mischung aus Glasur und Verdünnungsflüssigkeit in einem Dosier- und Messgefäß (3), das in der Glasuranlage vorgesehen ist, und Überprüfen der Dichte und Zusammensetzung der Mischung, um sie innerhalb der für ihre Verwendung vorgeschriebenen Toleranzen zu halten, indem geeignete Mengen jungfräulicher Glasur entnommen werden Additive oder Verdünnungsflüssigkeit;
- periodisches Ziehen von Mengen der Glasurmischung mit bearbeitbarer Dichte **durch** ein Zufuhrgefäß (4), das in der Verglasungsanlage vorgesehen und mit dem Dosier- und Messgefäß (3) verbunden ist, um eine Menge der Glasurmischung größer als einen minimalen Betriebswert zu halten innerhalb des Zufuhrgefäßes (4);
- Entnehmen der Glasurmischung mit bearbeitbarer Dichte aus dem Zufuhrgefäß (4), um eine Glasurapplikatoranordnung (5) zuzuführen, die sich in mindestens einer in der Verglasungsanlage vorgesehenen Verglasungskammer (6) befindet;
- Rückgewinnung der zugeführten und nicht aufgetragenen Glasurmischung vom Boden (6F) der Verglasungskammer (6) und Wiedereinführung derselben in den Kreislauf vor dem Dosier- und Messgefäß (3).

2. Verfahren nach Anspruch 1, **dadurch gekennzeichnet, dass** alternativ die zugeführte und nicht aufgebrachte Glasurmischungsrückgewinnung das Leiten der Mischung zu dem Dosier- und Messgefäß (3) oder zu einem Abfalllagerbehälter (8) umfasst, wobei der letztere Vorgang ist durchgeführt als Ergebnis des Nachweises eines signifikanten Dichteabfalls der Mischung aufgrund eines laufenden Waschvorgangs der Kammer (6).

3. Verfahren nach Anspruch 1, **dadurch gekennzeichnet, dass** die zurückgewonnene nicht aufgebrachte Glasurmischung in ein Vorratsgefäß (7) eingeführt wird, das in derselben Verglasungsanlage vorgesehen ist.

4. Verfahren nach Anspruch 3, **gekennzeichnet durch** Einschließen der Messung der Dichte der zurückgewonnenen Glasurmischung nach dem Rückgewinnungsschritt und wenn ein Mindestniveau in dem Vorratsgefäß (7) erreicht worden ist; Senden der zurückgewonnenen Glasurmischung in einen Abfalllagerbehälter (8), wenn deren gemessene Dichte niedriger ist als der bearbeitbare Wert mit einem ausgewählten Schwellenwert, der anzeigt, dass die Verglasungskammer (6) mit Wasser gewaschen wird.

5. Verfahren nach Anspruch 4, **gekennzeichnet durch** Einschließen einer neuen Messung des genauen Wertes der Dichte der im Dosier- und Messgefäß (3) enthaltenen Glasurmischung und, wenn diese Dichte niedriger als die bearbeitbare Dichte ist, Einführen von a berechnete zusätzliche Menge an Verdünnungsflüssigkeit, wobei letztere aus dem Abfalllagerbehälter (8) entnommen wurde, wobei die Verdünnungsflüssigkeit aus einer Lösung von Waschwasser und Glasurmischung bestand.

6. Verfahren nach Anspruch 1, **dadurch gekennzeichnet, dass** die Glasurmischung zuerst in einem Mischgefäß (2) hergestellt wird, an das die jungfräuliche Glasur, die Additive und die Verdünnungsflüssigkeit mit einer Dichte gebunden sind, die geringfügig größer als die endgültige verarbeitbare Dichte ist Die verarbeitbare Dichte wird anschließend innerhalb des Dosier- und Messgefäßes (3) durch weitere Verdünnung der Mischung erhalten.

7. Verfahren nach einem der Ansprüche 1 bis 6, **gekennzeichnet durch** ferner das Erfassen und Speichern von periodisch oder kontinuierlich erfassten und gespeicherten Daten, die von einer Prüfeinheit der Vorrichtung (1) von Sensoren und Messvorrichtungen der Vorrichtung (1) empfangen werden, wobei at mindestens eine Protokolldatei der durchgeführten Operationen und erfassten Daten und Bereitstellung der mindestens einen Protokolldatei für die lokale Anzeige oder Fernübertragung.

8. Vorrichtung zur Herstellung einer Glasurmischung für eine Verglasungsanlage, wobei die Glasurmischung feste Dosen von jungfräulicher Glasur hoher Dichte, Additiven und Verdünnungsflüssigkeit umfasst, wobei die Vorrichtung eine Dosiereinheit (D) enthält, die von einer Programmiereinheit gesteuert wird, z die Herstellung einer vorbestimmten Formulierung der Glasurmischung mit einer ausgewählten Dichte, wobei die Vorrichtung (1) **gekennzeichnet ist durch** Einschließen von:
- ein Dosier- und Messgefäß (3), das zur Aufnahme und Aufnahme der Glasurmischung, der Zusatzstoffe und der Verdünnungsflüssigkeit geeignet ist;
- erstes Messmittel (21), das in dem Dosier- und Messgefäß (3) wirkt, um den Dichtewert der in dem letzteren Gefäß enthaltenen Glasurmischung zu überprüfen;
- ein Zufuhrgefäß (4), das dazu bestimmt ist, mit Hilfe mindestens einer Transferpumpe (P3) regelmäßig eine Glasurmischung mit der richtigen Verarbeitungsdichte von dem Dosier- und Messgefäß (3) aufzunehmen, um ein Mindestbetriebsniveau darin aufrechtzuerhalten;
- motorisierte Rührmittel (40), die in dem Zufuhrgefäß (4) vorgesehen sind, um die Glasurmischung mit der bearbeitbaren Dichte in kontinuierlicher Bewegung zu halten;
- mindestens eine Förderpumpe (P4) zum periodischen Entnehmen der Glasurmischung mit bearbeitbarer Dichte aus dem Zufuhrgefäß (4) und Fördern einer Glasurapplikatoranordnung (5), die sich in mindestens einer in der Verglasungsanlage vorgesehenen Verglasungskammer (6) befindet;
- mindestens eine Rückgewinnungspumpe (P5) zur Rückgewinnung von nicht aufgetragener Glasurmischung oder Rückständen der Verglasungskammer (6), die vom Boden (6F) der Verglasungskammer (6) gewaschen werden;
- einen Abfalllagerbehälter (8), der in eine unterbrechbare Flüssigkeitskommunikation mit dem Boden (6f) versetzt und zur Aufnahme der Waschrückstände angepasst ist;
- Umleitungsmittel (9), die so ausgelegt sind, dass sie das vom Boden zurückgewonnene Material alternativ zum Dosier- und Messgefäß (3) oder zum Abfalllagerbehälter (8) leiten.

9. Vorrichtung nach Anspruch 8, **dadurch gekennzeichnet, dass** das Umleitungsmittel (9) eine Fluidumlenkung (91) enthält, die dazu bestimmt ist, das zurückgewonnene Material auf Befehl alternativ zu dem Dosier- und Messgefäß (3) oder zu dem Abfalllager zu leiten Behälter (8).

10. Vorrichtung nach Anspruch 8, **dadurch gekennzeichnet, dass** die Umleitungseinrichtung (9) ein Vorratsgefäß (7) umfasst, das zur Aufnahme des zurückgewonnenen Materials angepasst ist, und ferner eine zweite Messeinrichtung (22) umfasst, die darauf abzielt, den Dichtewert der genannten zu überprüfen zurückgewonnenes Material und Sortierpumpen (P6, P7), die selektiv betrieben werden können, wenn ein Mindestfüllstand im Vorratsgefäß (7) erreicht ist, um entweder die zurückgewonnene Glasurmischung zu dem Dosier- und Messgefäß (3) zu schicken, wenn eine Dichte vorliegt nahe an der bearbeitbaren Dichte wird erfasst, oder um das zurückgewonnene Glasurgemisch an das Abfalllagergefäß (8) zu senden, wenn eine Dichte erfasst wird, die niedriger als die bearbeitbare Dichte eines vorbestimmten Schwellenwerts ist, wobei das letztere Gefäß in Fluidverbindung mit gesetzt wird das Dosier- und Messgefäß (3).

11. Vorrichtung nach Anspruch 8, **gekennzeichnet durch** weiteres Einschließen eines Mischgefäßes (2), das in Fluidverbindung mit der Dosiereinheit (D) und mit dem Dosier- und Messgefäß (3) steht und zur Herstellung und Aufnahme einer Glasur geeignet ist Gemisch mit einer Dichte, die geringfügig größer als die endgültige verarbeitbare Dichte ist und anschließend auf Anfrage dem Dosier- und Messgefäß (3) zugeführt wird.

12. Vorrichtung nach einem der Ansprüche 8 bis 11, **gekennzeichnet durch** ferner Einschließen von Softwaremitteln in eine computergesteuerte Prüfeinheit der Vorrichtung (1) zur Datenerfassung von Sensoren und Messgeräten der Vorrichtung (1) und zur Erzeugung von mindestens eine Protokolldatei, die die Daten und Informationen enthält, die sich auf die Situation der Glasurmischung beziehen, und um mindestens eine Protokolldatei für die nachfolgende lokale oder Remote-Anzeige verfügbar zu machen.

## Revendications

1. Procédé de préparation d'un mélange de glaçure pour un vitrage, ledit mélange de glaçure comprenant des doses sélectionnées de glaçure vierge haute densité, d'additifs et de liquide de dilution, ledit glaçage vierge et les additifs étant fournis sur demande par une unité de dosage (D), ledit procédé étant **caractérisé en ce qu'**il comprend:
- doser les composants dudit mélange de glaçure et de liquide de dilution dans un récipient de dosage et de mesure (3) prévu dans ladite usine de vitrage, et vérifier la densité et la composition dudit mélange pour le maintenir dans les tolérances prescrites pour son utilisation en tirant des quantités appropriées de glaçure vierge , additifs ou liquide de dilution;
- soutirer périodiquement des quantités dudit mélange de glaçure ayant une densité exploitable par un récipient d'alimentation (4) prévu dans ladite installation de vitrage et connecté audit récipient de dosage et de mesure (3), de manière à maintenir une quantité de mélange de glaçure supérieure à une valeur de fonctionnement minimale à l'intérieur dudit récipient d'alimentation (4);
- prélever ledit mélange de glaçure ayant une densité exploitable à partir du récipient d'alimentation (4) pour alimenter un ensemble applicateur de glaçage (5) situé dans au moins une chambre de vitrage (6) prévue dans ladite usine de vitrage;
- récupérer le mélange de glaçure fourni et non appliqué au fond (6F) de la chambre de vitrage (6), et le réintroduire en circulation en amont dudit récipient de dosage et de mesure (3).

2. Procédé selon la revendication 1, **caractérisé en ce que**, en variante, la récupération du mélange de glaçure fourni et non appliqué comprend la direction dudit mélange vers ledit récipient de dosage et de mesure (3), ou vers un conteneur de stockage de déchets (8), cette dernière opération étant réalisée à la suite de la détection d'une baisse significative de la densité dudit mélange, due à une opération de lavage en cours de ladite chambre (6).

3. Procédé selon la revendication 1, **caractérisé en ce que** le mélange de glaçure non appliqué récupéré est introduit dans un récipient de stockage (7) prévu dans la même vitrerie.

4. Procédé selon la revendication 3, **caractérisé en ce qu'**il consiste à mesurer la densité du mélange de glaçure récupéré après ladite étape de récupération et lorsqu'un niveau minimum a été atteint dans ledit récipient de stockage (7); envoyer le mélange de glaçage récupéré dans un conteneur de stockage de déchets (8), lorsque sa densité mesurée est inférieure à la valeur réalisable avec un seuil sélectionné qui indique que ladite chambre de vitrage (6) est lavée à l'eau.

5. Procédé selon la revendication 4, **caractérisé par** l'inclusion d'une nouvelle mesure de la valeur exacte de la densité dudit mélange de glaçure contenu dans le récipient de dosage et de mesure (3) et, si cette densité est inférieure à la densité réalisable, introduction d'un une quantité supplémentaire calculée de liquide de dilution, en prenant ce dernier dudit récipient de stockage de déchets (8), ledit liquide de dilution consistant en une solution d'eau de lavage et de mélange de glaçure.

6. Procédé selon la revendication 1, **caractérisé en ce que** ledit mélange de glaçure est d'abord préparé dans un récipient de mélange (2), auquel sont liés ledit glaçage vierge, les additifs et le liquide de dilution, avec une densité légèrement supérieure à la densité finale réalisable, ce la densité exploitable étant obtenue ultérieurement à l'intérieur dudit récipient de dosage et de mesure (3) par une dilution supplémentaire dudit mélange.

7. Procédé selon l'une quelconque des revendications 1 à 6, **caractérisé en ce qu'**il comprend en outre l'acquisition et le stockage, périodiquement ou en continu, des données reçues par une unité de contrôle de l'appareil (1) à partir de capteurs et d'appareils de mesure de l'appareil (1), créant à au moins un fichier journal des opérations effectuées et des données acquises, et mise à disposition dudit au moins un fichier journal pour un affichage local ou une transmission à distance.

8. Appareil pour la préparation d'un mélange d'émail pour une usine de vitrage, ledit mélange d'émail comprenant des doses fixes de vernis vierge haute densité, d'additifs et de liquide de dilution, ledit appareil comprenant une unité de dosage (D), commandée par une unité de programmation, pour la préparation d'une formulation prédéterminée dudit mélange de glaçure, avec une densité sélectionnée, ledit appareil (1) étant **caractérisé en ce qu'**il comprend:
- un récipient de dosage et de mesure (3), adapté pour recevoir et contenir ledit mélange de glaçure, les additifs et le liquide de dilution;
- un premier moyen de mesure (21), agissant dans ledit récipient de dosage et de mesure (3) pour vérifier la valeur de densité dudit mélange de glaçure contenu dans ce dernier récipient;
- un récipient d'alimentation (4), destiné à recevoir périodiquement un mélange de glaçure ayant la densité de travail correcte dudit récipient de dosage et de mesure (3) au moyen d'au moins une pompe de transfert (P3), de manière à maintenir un niveau de fonctionnement minimal à l'intérieur;
- des moyens d'agitation motorisés (40), prévus dans ledit récipient d'alimentation (4) de manière à maintenir ledit mélange de glaçure ayant la densité exploitable en mouvement continu;
- au moins une pompe d'alimentation (P4) pour prélever périodiquement ledit mélange de glaçage ayant une densité exploitable à partir dudit récipient d'alimentation (4) et alimenter un ensemble applicateur de glaçage (5) situé dans au moins une chambre de vitrage (6) prévue dans ladite usine de vitrage;
- au moins une pompe de récupération (P5) pour récupérer le mélange de glaçure non appliqué ou les résidus de la chambre de vitrage (6) en lavant du fond (6F) de ladite chambre de vitrage (6);
- un conteneur de stockage de déchets (8), mis en communication fluidique interruptible avec ledit fond (6f) et adapté pour recevoir lesdits résidus de lavage;
- des moyens de détournement (9), adaptés pour diriger le matériau récupéré dudit fond alternativement vers ledit récipient de dosage et de mesure (3) ou vers ledit conteneur de stockage de déchets (8).
- Appareil selon la revendication 8, **caractérisé en ce que** lesdits moyens de détournement (9) comprennent un inverseur de fluide (91) conçu pour diriger, sur commande, ledit matériau récupéré alternativement vers ledit récipient de dosage et de mesure (3) ou vers ledit stockage de déchets. Conteneur (8).

9. Appareil selon la revendication 8, **caractérisé en ce que** lesdits moyens de déviation (9) comprennent un inverseur de fluide (91) conçu pour diriger, sur commande, ledit matériau récupéré alternativement vers ledit récipient de dosage et de mesure (3) ou vers ledit conteneur de stockage de déchets (8).

10. Appareil selon la revendication 8, **caractérisé en ce que** lesdits moyens de détournement (9) comprennent un récipient de stockage (7) adapté pour recevoir ledit matériau récupéré, et en comprenant en outre des seconds moyens de mesure (22) visant à vérifier la valeur de densité desdits matériau récupéré, et pompes de tri (P6, P7) pouvant être actionnées sélectivement lorsqu'un niveau minimum est atteint dans le récipient de stockage (7), soit pour envoyer ledit mélange de glaçure récupéré audit récipient de dosage et de mesure (3), lorsqu'une densité près de la densité exploitable est détectée, ou pour envoyer ledit mélange de glaçure récupéré audit récipient de stockage de déchets (8), lorsqu'une densité inférieure à la densité exploitable d'un seuil prédéterminé est détectée, respectivement, ce dernier récipient étant mis en communication fluidique avec ledit récipient de dosage et de mesure (3).

11. Appareil selon la revendication 8, **caractérisé en ce qu'**il comprend en outre un récipient de mélange (2), mis en communication fluidique avec ladite unité de dosage (D) et avec ledit récipient de dosage et de mesure (3), et adapté pour préparer et contenir un glacis. mélange ayant une densité légèrement supérieure à la densité finale utilisable, à fournir ultérieurement sur ladite cuve de dosage et de mesure (3) sur demande.

12. Appareil selon l'une quelconque des revendications 8 à 11, **caractérisé en ce qu'**il comprend en outre des moyens logiciels dans une unité de vérification informatisée dudit appareil (1) pour l'acquisition de données à partir de capteurs et de dispositifs de mesure de l'appareil (1), et pour la création de au moins un fichier journal contenant lesdites données et informations relatives à la situation du mélange de glaçure, et pour mettre à disposition au moins un fichier journal pour un affichage ultérieur de celui-ci localement ou à distance.
